# EUROPÄISCHE PATENTANMELDUNG

(11) **EP 4 644 143 A1**
(43) Veröffentlichungstag der Anmeldung: **05.11.2025**
(21) Anmeldenummer: 25173086.7
(22) Anmeldetag: 29.04.2025
(51) Int. Cl.: B60H 1/32, F25B 7/00

(54) **TEMPERIERUNGSSYSTEM ZUM HEIZEN UND KÜHLEN EINES INNENRAUMS UND/ODER MINDESTENS EINER KOMPONENTE EINES FAHRZEUGS**

(30) Priorität: 03.05.2024 DE 102024112544
(71) Anmelder: Daimler Truck AG, 70771 Leinfelden-Echterdingen (DE)
(72) Erfinder: Schad, Maike, Ochsenhausen (DE); Calatayud, Jose Luis, Limburgerhof (DE)

(57) **Zusammenfassung**

Die Erfindung betrifft ein Temperierungssystem (1) zum Heizen und Kühlen eines Innenraums und/oder mindestens einer Komponente eines Fahrzeugs, aufweisend einen ersten, mit einem Tieftemperatur-/Hochdruck-Kältemittel betriebenen Kältemittelkreislauf (2) und einen zweiten, mit einem Hochtemperatur-/Niederdruck-Kältemittel betriebenen Kältemittelkreislauf (3), welche über einen Hauptwärmetauscher (4) thermisch miteinander verbunden sind, ferner einen ersten Kühlmittelkreislauf (5) und einen zweiten Kühlmittelkreislauf (6), wobei der erste Kühlmittelkreislauf (5) über einen ersten Nebenwärmetauscher (7) mit dem ersten Kältemittelkreislauf (2) und der zweite Kühlmittelkreislauf (6) über einen zweiten Nebenwärmetauscher (8) mit dem zweiten Kältemittelkreislauf (3) gekoppelt ist, wobei das Temperierungssystem (1) dazu konfiguriert ist, in einem Kühlmodus und in einem Heizmodus des zu heizenden Innenraums und/oder der zu heizenden Komponente betrieben zu werden.

## Beschreibung

Die Erfindung betrifft ein Temperierungssystem zum Heizen und Kühlen eines Innenraums und/oder mindestens einer Komponente eines Fahrzeugs gemäß dem Oberbegriff des Anspruchs 1 sowie ein Fahrzeug gemäß Anspruch 5.

In mobilen Anwendungen, beispielsweise Fahrzeugen, werden Klimasysteme verwendet, die einen Kältekreislauf umfassen, beispielsweise zur Kühlung und/oder Beheizung eines Innenraums eines Fahrzeugs. Beim Einsatz der Fahrzeuge in unterschiedlichen Klimazonen muss sichergestellt sein, dass das Klimasystem funktionstüchtig und effizient betrieben werden kann. Die Grenzen zur optimalen Auslegung stellen hier unter anderem der Einsatzbereich des verwendeten Kältemittels und der Auslegungsbereich des Verdichters des Klimasystems dar. Zusammenfassend sind die Herausforderungen der heutigen Systeme sowohl die Sicherstellung der gewünschten Innenraumtemperatur und Entfeuchtung der Innenraumluft bei stark variierenden Außentemperaturen als auch die Erreichung einer hohen Effizienz.

Klimasysteme mit nur einem Kältekreislauf, der mit einem der Kältemittel R134a, R1234yf, R290 oder ähnlichem befüllt ist, können sehr effizient und leistungsstark bei höheren Außentemperaturen im Kühlbetrieb sein. Allerdings sind diese Systeme bei niedrigeren Außentemperaturen technisch limitiert. Somit ist eine alternative Heizquelle für den Einsatz dieser Klimasysteme in kalten Regionen erforderlich. Hierfür werden elektrische Heizer (niedrige Effizienz) oder fossile Heizer (nicht emissionsfrei) verwendet.

Klimasysteme mit nur einem Kältekreislauf, der mit dem Kältemittel R744 befüllt ist, können sehr effizient und leistungsstark bei niedrigen Außentemperaturen im Heizbetrieb sein. Allerdings reduziert sich die Effizienz des Systems erheblich bei höheren Außentemperaturen im Kühlbetrieb.

DE 10 2008 047 753 A1 beschreibt eine Kälteanlage, insbesondere eine Transportkälteanlage, mit mindestens zwei Nutztemperaturniveaus, umfassend mindestens einen ersten Kältemittelkreis und einen zweiten Kältemittelkreis, wobei jeder Kältemittelkreis mindestens einen Verdichter, mindestens ein Entspannungsorgan und mindestens einen Wärmetauscher aufweist, der Wärme von einem den Wärmetauscher umgebenden Medium aufnehmen oder an das den Wärmetauscher umgebende Medium abgeben kann, wobei mindestens einer der Wärmetauscher Wärme aus einem zu kühlenden Raum bei einem der Nutztemperaturniveaus aufnimmt und mindestens einer der Wärmetauscher Wärme an die Umgebung abgibt. Der erste und der zweite Kältemittelkreis sind über mindestens einen Kaskadenwärmetauscher miteinander gekoppelt, so dass Wärme von einem Kältemittelkreis an den anderen Kältemittelkreis übertragen werden kann, wobei der Kaskadenwärmetauscher weiterhin auch Wärme von einem den Kaskadenwärmetauscher umgebenden Medium aufnehmen oder an das den Kaskadenwärmetauscher umgebende Medium abgeben kann.

Der Erfindung liegt die Aufgabe zu Grunde, ein neuartiges Temperierungssystem zum Heizen und Kühlen eines Innenraums und/oder mindestens einer Komponente eines Fahrzeugs sowie ein neuartiges Fahrzeug anzugeben.

Die Aufgabe wird erfindungsgemäß gelöst durch ein Temperierungssystem zum Heizen und Kühlen eines Innenraums und/oder mindestens einer Komponente eines Fahrzeugs mit den Merkmalen des Anspruchs 1 sowie ein Fahrzeug mit den Merkmalen des Anspruchs 5.

Vorteilhafte Ausgestaltungen der Erfindung sind Gegenstand der Unteransprüche.

Es wird ein Temperierungssystem zum Heizen und Kühlen eines Innenraums und/oder mindestens einer Komponente eines Fahrzeugs vorgeschlagen, aufweisend einen ersten, mit einem Tieftemperatur-/Hochdruck-Kältemittel betriebenen Kältemittelkreislauf und einen zweiten, mit einem Hochtemperatur-/Niederdruck-Kältemittel betriebenen Kältemittelkreislauf, welche über einen Hauptwärmetauscher thermisch miteinander verbunden sind. Erfindungsgemäß ist ein erster Kühlmittelkreislauf und ein zweiter Kühlmittelkreislauf vorgesehen, wobei der erste Kühlmittelkreislauf über einen ersten Nebenwärmetauscher mit dem ersten Kältemittelkreislauf und der zweite Kühlmittelkreislauf über einen zweiten Nebenwärmetauscher mit dem zweiten Kältemittelkreislauf gekoppelt ist. Das Temperierungssystem ist dazu konfiguriert, in einem Kühlmodus des zu kühlenden Innenraums und/oder der zu kühlenden Komponente die dort vorhandene Wärme in den ersten Kühlmittelkreislauf einzutragen und die Wärme aus dem zweiten Kühlmittelkreislauf in eine Umgebung auszutragen, und in einem Heizmodus des zu heizenden Innenraums und/oder der zu heizenden Komponente die in der Umgebung oder aus Abwärme einer Komponente (zum Beispiel eines elektrischen Antriebs) vorhandene Wärme in den ersten Kühlmittelkreislauf einzutragen und die Wärme aus dem zweiten Kühlmittelkreislauf in den zu heizenden Innenraum und/oder die zu heizende Komponente auszutragen.

Die vorliegende Erfindung betrifft ein Temperierungssystem zum Heizen und Kühlen eines Innenraums und/oder von Komponenten eines Fahrzeugs, insbesondere eines Nutzfahrzeugs, mit einem kaskadierten Kreislaufsystem, das einen ersten, mit einem Tieftemperatur-/Hochdruck-Kältemittel betriebenen Kältemittelkreislauf und einen zweiten, mit einem Hochtemperatur-/Niederdruck-Kältemittel betriebenen Kältemittelkreislauf aufweist, welche über einen Hauptwärmetauscher thermisch miteinander verbunden sind.

Durch die erfindungsgemäße Lösung kann ein Temperierungssystem mit besonders geringem Steuerungsaufwand realisiert werden, das sowohl effizient zum Heizen als auch effizient zum Kühlen verwendet werden kann.

Die erfindungsgemäße Lösung ermöglicht im Vergleich zu Systemen mit nur einem Kältekreislauf den Einsatz des Klimasystems in einem erweiterten Außentemperaturbereich (von sehr kalten Regionen bis zu sehr warmen Regionen). Bei sehr niedrigen Außentemperaturen kann die benötigte Heizleistung zum Aufheizen des Fahrzeugs sehr effizient gedeckt werden. Ebenso kann bei sehr hohen Außentemperaturen die benötigte Kühlleistung zum Abkühlen des Fahrzeugs sehr effizient gedeckt werden. Durch die Möglichkeit einer Teillastregelung (mit nur einem Kältekreislauf) bei moderaten Außentemperaturen ergibt sich eine Effizienzsteigerung. Die Menge an Kältemittel mit hohem GWP-Wert kann im System reduziert werden. Ferner ergibt sich eine Effizienzsteigerung im Reheat-Modus. Die Abwärme aus anderen Komponenten kann als Wärmequelle für eine Wärmepumpe verwendet werden. Eine Anwendung der erzeugten Kälte und/oder Wärme für die Abkühlung und/oder Aufheizung anderer Komponenten ist möglich. Mit einem zusätzlichen Verflüssiger in der warmen Stufe ergibt sich eine höhere Effizienz im Kühlbetrieb. Ferner wird eine sichere Anwendung von natürlichen Kältemitteln (beispielsweise R744 oder R290) bei indirekter Kühlung und/oder Heizung des Innenraums ermöglicht. Dabei wird das Kühlmittel durch das Kältemittel gekühlt oder geheizt, danach wird die Luft im Fahrzeug verteilt und für Kühlung und/oder Heizung verwendet.

Alle diese Vorteile sorgen für ein Energieersparnis während des Kühl- und Heizbetriebs oder bei einem elektrisch angetriebenen Fahrzeug für eine Steigerung der Reichweite und Reduzierung der Betriebskosten.

Ausführungsbeispiele der Erfindung werden im Folgenden anhand von Zeichnungen näher erläutert.

Dabei zeigen:
- Fig. 1: eine schematische Ansicht eines Temperierungssystems zum Heizen und Kühlen eines Innenraums und/oder mindestens einer Komponente eines Fahrzeugs,
- Fig. 2: eine schematische Ansicht einer Ausführungsform des Temperierungssystems mit einem zusätzlichen Verflüssiger,
- Fig. 3: eine schematische Ansicht des Temperierungssystems aus Figur 1 im Heizbetrieb,
- Fig. 4: eine schematische Ansicht einer weiteren Ausführungsform des Temperierungssystems,
- Fig. 5: eine schematische Ansicht einer weiteren Ausführungsform des Temperierungssystems,
- Fig. 6: eine schematische Ansicht einer weiteren Ausführungsform des Temperierungssystems im Heizbetrieb bei dem zusätzlich zur in Figur 5 gezeigten Konfiguration ein Verflüssiger angeordnet ist,
- Fig. 7: eine schematische Ansicht des Temperierungssystems aus den Figuren 1 und 3 im Teillastbetrieb.

Einander entsprechende Teile sind in allen Figuren mit den gleichen Bezugszeichen versehen.

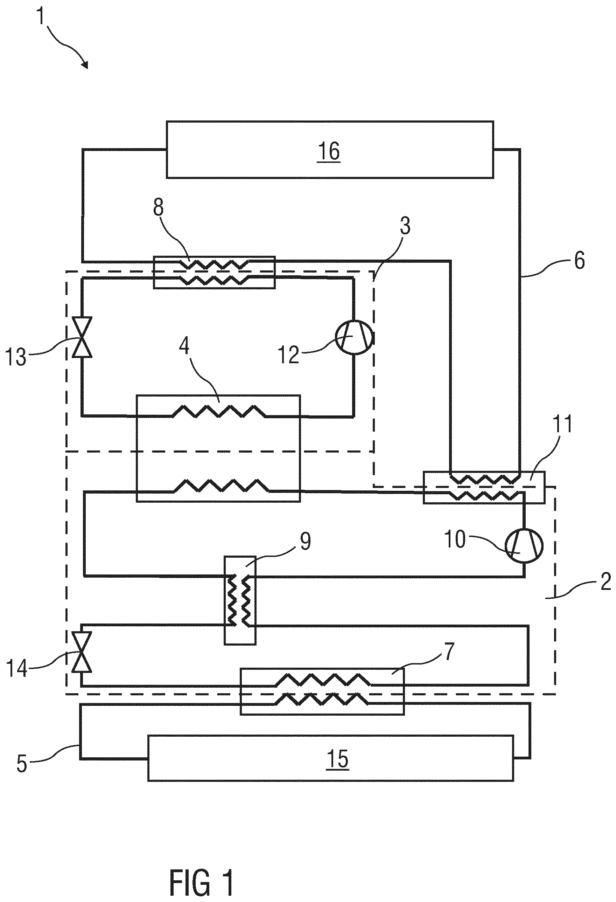

Figur 1 ist eine schematische Ansicht eines Temperierungssystems 1 zum Heizen und Kühlen eines Innenraums und/oder mindestens einer Komponente eines Fahrzeugs, beispielsweise eines Nutzfahrzeugs, insbesondere eines Fahrzeugs mit mindestens einem elektrischen Antrieb. Ein Fahrzeug mit einer Verbrennungskraftmaschine wäre auch möglich. Das Temperierungssystem 1 weist einen ersten, mit einem Tieftemperatur-/Hochdruck-Kältemittel betriebenen Kältemittelkreislauf 2, auch als kalte Stufe bezeichnet, und einen zweiten, mit einem Hochtemperatur-/Niederdruck-Kältemittel betriebenen Kältemittelkreislauf 3, auch als warme Stufe bezeichnet, auf, welche über einen Hauptwärmetauscher 4 im Rahmen eines Kaskadensystems thermisch miteinander verbunden sind. Ferner weist das Temperierungssystem 1 einen ersten Kühlmittelkreislauf 5 und einen zweiten Kühlmittelkreislauf 6 auf, wobei der erste Kühlmittelkreislauf 5 über einen ersten Nebenwärmetauscher 7 mit dem ersten Kältemittelkreislauf 2 und der zweite Kühlmittelkreislauf 6 über einen zweiten Nebenwärmetauscher 8 mit dem zweiten Kältemittelkreislauf 3 gekoppelt ist.

Die Kaskade kann nicht nur zur Abkühlung, sondern auch zur Beheizung von Stoffströmen eingesetzt werden. Für den ersten Kältemittelkreislauf 2 kann beispielsweise das Kältemittel R744 eingesetzt werden.

Dabei kann optional ein innerer Wärmetauscher 9 im ersten Kältemittelkreislauf 2 vorgesehen sein, der einen Kreislaufzweig höherer Temperatur mit einem Kreislaufzweig niedrigerer Temperatur thermisch verbindet. Der ersten Kältemittelkreislauf 2 weist einen Verdichter 10 auf, nach dessen Ausgang ein Zusatzwärmetauscher 11 angeordnet ist. Hier soll das Kältemittel auf ein niedrigeres Temperaturniveau abgekühlt und gegebenenfalls kondensiert werden. Im anschließend vom Kältemittel durchströmten Hauptwärmetauscher 4 wird die vom ersten Kältemittelkreislauf 2 aufgenommene Energie an den zweiten Kältemittelkreislauf 3 abgegeben. Für den zweiten Kältemittelkreislauf 3 kann beispielsweise R1234yf, R134a, R152a, R32, R600a, R290 oder ein Kältemittel mit ähnlichen Eigenschaften verwendet werden.

Der erste Nebenwärmetauscher 7 (Kühlmittel-Kältemittel-Wärmeübertrager) dient als Verdampfer des Kältemittels des ersten Kältemittelkreislaufs 2. Der zweite Nebenwärmetauscher 8 (Kältemittel-Kühlmittel-Wärmeübertrager) dient als Verflüssiger und/oder Gaskühler des Kältemittels des zweiten Kältemittelkreislaufs 3. Ferner weist der zweite Kältemittelkreislauf 3 einen Verdichter 12 und ein Expansionsorgan 13 auf. Der erste Kältemittelkreislauf 2 weist ebenfalls ein Expansionsorgan 14 auf.

Als Wärmequelle 15 und Wärmesenke 16 des Kaskadensystems kann die Innenluft oder Außenluft oder die zu kühlenden oder zu beheizenden Komponente genutzt werden. Die Wärmequelle 15 und/oder Wärmesenke 16 ist über je einen der Kühlmittelkreisläufe 5, 6 mit dem jeweiligen Kältemittelkreislauf 2, 3 gekoppelt.

In der gezeigten Ausführungsform durchströmt das Kältemittel im ersten Kältemittelkreislauf 2 nacheinander den ersten Nebenwärmetauscher 7, optional eine erste Seite des inneren Wärmetauschers 9, den Verdichter 10, den Zusatzwärmetauscher 11, den Hauptwärmetauscher 4, optional die zweite Seite des inneren Wärmetauschers 9, das Expansionsorgan 14 und gelangt wieder zum ersten Nebenwärmetauscher 7. Das Kältemittel im zweiten Kältemittelkreislauf 3 durchströmt nacheinander den Hauptwärmetauscher 4, den Verdichter 12, den zweiten Nebenwärmetauscher 8 und das Expansionsorgan 13 und gelangt dann wieder zum Hauptwärmetauscher 4. Das Kühlmittel des ersten Kühlmittelkreislaufs 5 durchströmt den ersten Nebenwärmetauscher 7 und die Wärmequelle 15. Das Kühlmittel des zweiten Kühlmittelkreislaufs 6 durchströmt nacheinander den zweiten Nebenwärmetauscher 8, den Zusatzwärmetauscher 11 und die Wärmesenke 16.

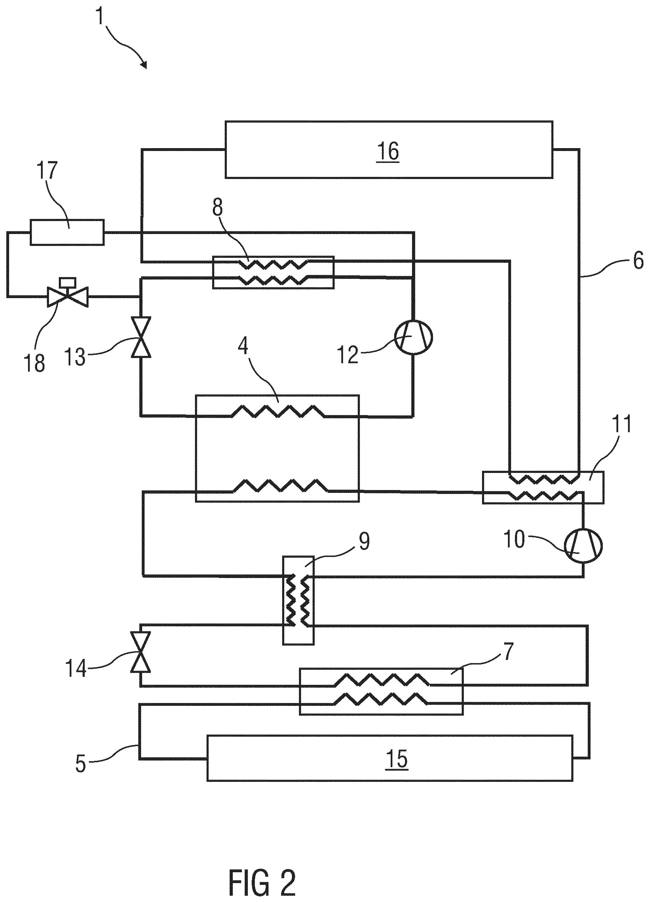

Figur 2 ist eine schematische Ansicht einer Ausführungsform des Temperierungssystems 1, bei dem zusätzlich zur in Figur 1 gezeigten Konfiguration ein zusätzlicher Verflüssiger 17 im zweiten Kältemittelkreislauf 3 angeordnet ist, insbesondere parallel mit dem zweiten Nebenwärmetauscher 8. Der Verflüssiger 17 überträgt Abwärme direkt an die Luft, um die Effizienz im Kühlbetrieb zu erhöhen. Ein in Reihe mit dem Verflüssiger 17 geschaltetes Magnetventil 18 dient der optionalen Zuschaltung des Verflüssigers 17. Der Verflüssiger 17 kann auch in allen im Folgenden dargestellten Ausführungsformen verwendet werden.

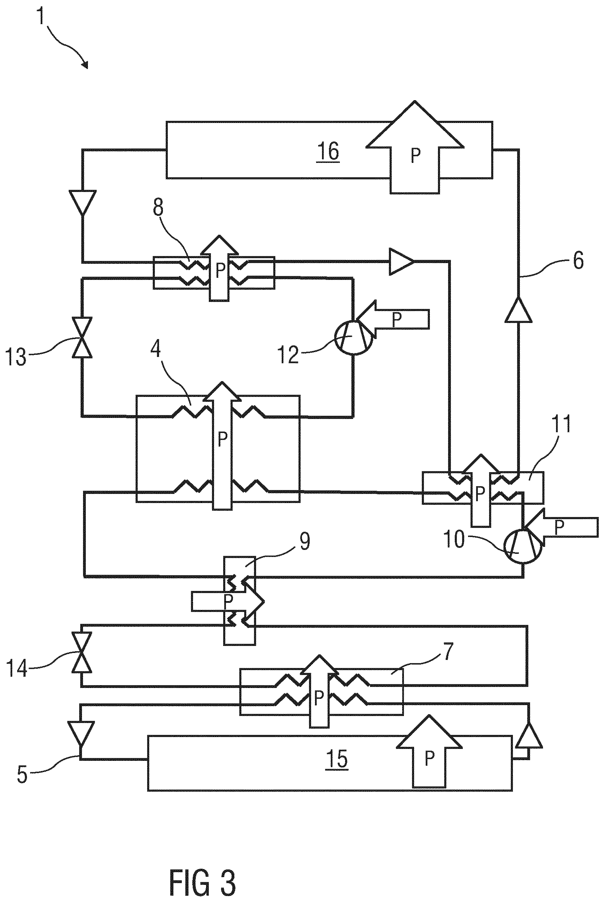

Figur 3 ist eine schematische Ansicht des Temperierungssystems 1 aus Figur 1 im Heizbetrieb. Dabei dienen/dient die Außenluft und/oder eine zu kühlende Komponente des Fahrzeugs und/oder ein Kühlmittelheizer als Wärmequelle 15, während der Innenraum und/oder eine zu beheizende Komponente des Fahrzeugs als Wärmesenke 16 dienen/dient. Das Ziel ist dabei, das Kühlmittel im zweiten Kühlmittelkreislauf 6 zu heizen, um den Innenraum und/oder mindestens eine Komponente des Fahrzeugs zu heizen. Die in Figur 3 dargestellten Pfeile P zeigen den Fluss von Wärme und/oder Arbeit im Temperierungssystems 1 im Heizbetrieb an.

Wenn das Temperierungssystems 1 aus Figur 1 im Kühlbetrieb betrieben wird, dann dienen/dient der Innenraum und/oder eine zu kühlende Komponente des Fahrzeugs als Wärmequelle 15, während die Außenluft und/oder eine zu beheizende Komponente des Fahrzeugs als Wärmesenke 16 dient.

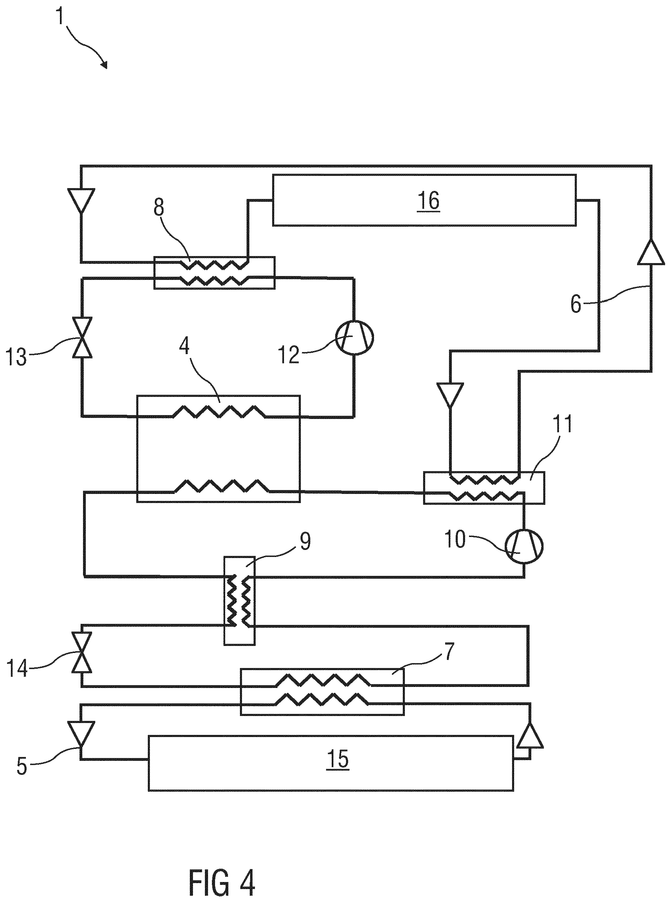

Figur 4 ist eine schematische Ansicht einer weiteren Ausführungsform des Temperierungssystems 1. Im Unterschied zu Figur 1 durchströmt das Kühlmittel des zweiten Kühlmittelkreislaufs 6 nacheinander den zweiten Nebenwärmetauscher 8, die Wärmesenke 16 und den Zusatzwärmetauscher 11. Im Heizbetrieb dienen/dient die Außenluft und/oder eine zu kühlende Komponente des Fahrzeugs und/oder ein Kühlmittelheizer als Wärmequelle 15, während der Innenraum und/oder eine zu beheizende Komponente des Fahrzeugs als Wärmesenke 16 dienen/dient.

Wenn das Temperierungssystem 1 aus Figur 4 im Kühlbetrieb betrieben wird, dann dienen/dient der Innenraum und/oder eine zu kühlende Komponente des Fahrzeugs als Wärmequelle 15, während die Außenluft und/oder eine zu beheizende Komponente des Fahrzeugs als Wärmesenke 16 dient.

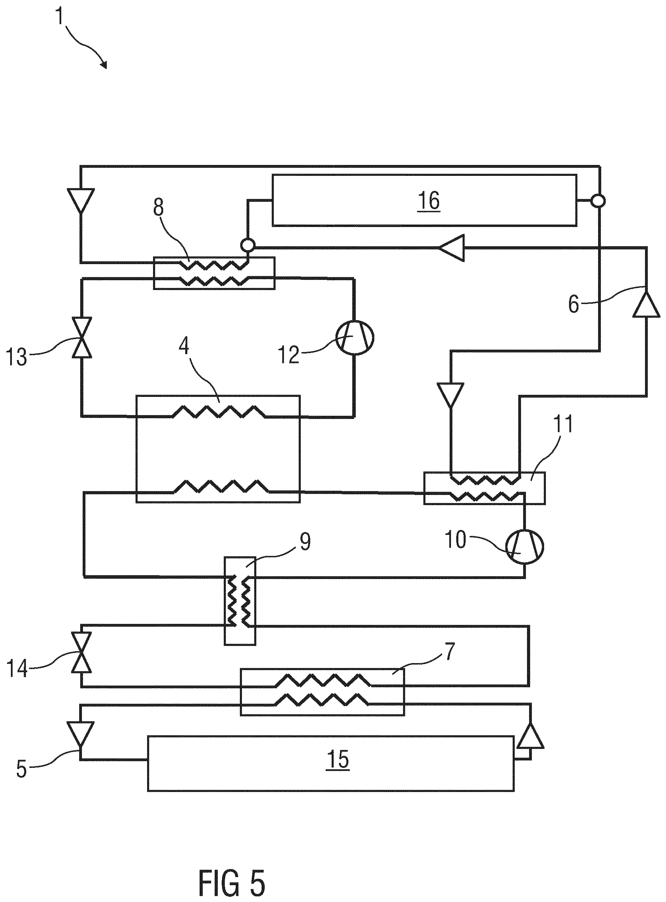

Figur 5 ist eine schematische Ansicht einer weiteren Ausführungsform des Temperierungssystems 1. Im Unterschied zu Figur 1 durchströmt das Kühlmittel des zweiten Kühlmittelkreislaufs 6 nacheinander den zweiten Nebenwärmetauscher 8, die Wärmesenke 16, und gelangt dann in einem ersten Zweig direkt zurück zum zweiten Nebenwärmetauscher 8 und in einem zweiten Zweig über den Zusatzwärmetauscher 11 zurück zum zweiten Nebenwärmetauscher 8. Der Nebenwärmetauscher 8 und der Zusatzwärmetauscher 11 sind parallel geschaltet. Im Heizbetrieb dienen/dient die Außenluft und/oder eine zu kühlende Komponente des Fahrzeugs und/oder ein Kühlmittelheizer als Wärmequelle 15, während der Innenraum und/oder eine zu beheizende Komponente des Fahrzeugs als Wärmesenke 16 dienen/dient.

Wenn das Temperierungssystems 1 aus Figur 5 im Kühlbetrieb betrieben wird, dann dienen/dient der Innenraum und/oder eine zu kühlende Komponente des Fahrzeugs als Wärmequelle 15, während die Außenluft und/oder eine zu beheizende Komponente des Fahrzeugs als Wärmesenke 16 dient.

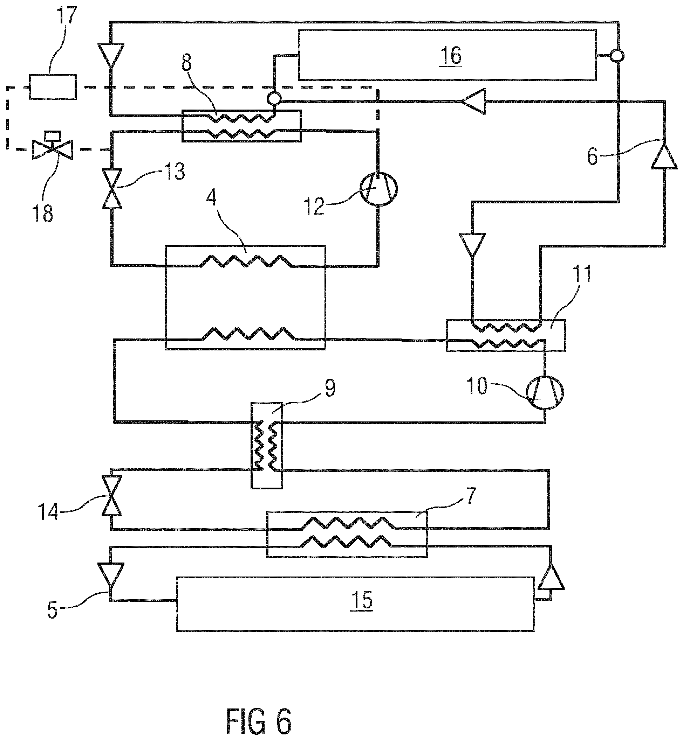

Figur 6 ist eine schematische Ansicht einer weiteren Ausführungsform des Temperierungssystems 1 bei dem zusätzlich zur in Figur 5 gezeigten Konfiguration (und ähnlich wie in Figur 2) ein zusätzlicher Verflüssiger 17 im zweiten Kältemittelkreislauf 3 angeordnet ist, insbesondere parallel mit dem zweiten Nebenwärmetauscher 8. Der Verflüssiger 17 überträgt Abwärme direkt an die Luft, um die Effizienz im Kühlbetrieb zu erhöhen. Ein in Reihe mit dem Verflüssiger 17 geschaltetes Magnetventil 18 dient der optionalen Zuschaltung des Verflüssigers 17. Im Heizbetrieb dienen/dient die Außenluft und/oder eine zu kühlende Komponente des Fahrzeugs und/oder ein Kühlmittelheizer als Wärmequelle 15, während der Innenraum und/oder eine zu beheizende Komponente des Fahrzeugs als Wärmesenke 16 dienen/dient.

Wenn das Temperierungssystem 1 aus Figur 6 im Kühlbetrieb betrieben wird, dann dienen/dient der Innenraum und/oder eine zu kühlende Komponente des Fahrzeugs als Wärmequelle 15, während die Außenluft und/oder eine zu beheizende Komponente des Fahrzeugs als Wärmesenke 16 dient.

Bei Teillast kann der zweite Kältemittelkreislauf 3 des Kaskadensystems ausgeschaltet werden und nur der Zusatzwärmetauscher 11 zur Beheizung der Wärmesenke 16 und zur vollständigen Abkühlung und/oder Kondensation des Kältemittels des ersten Kältemittelkreislaufs 2 verwendet werden.

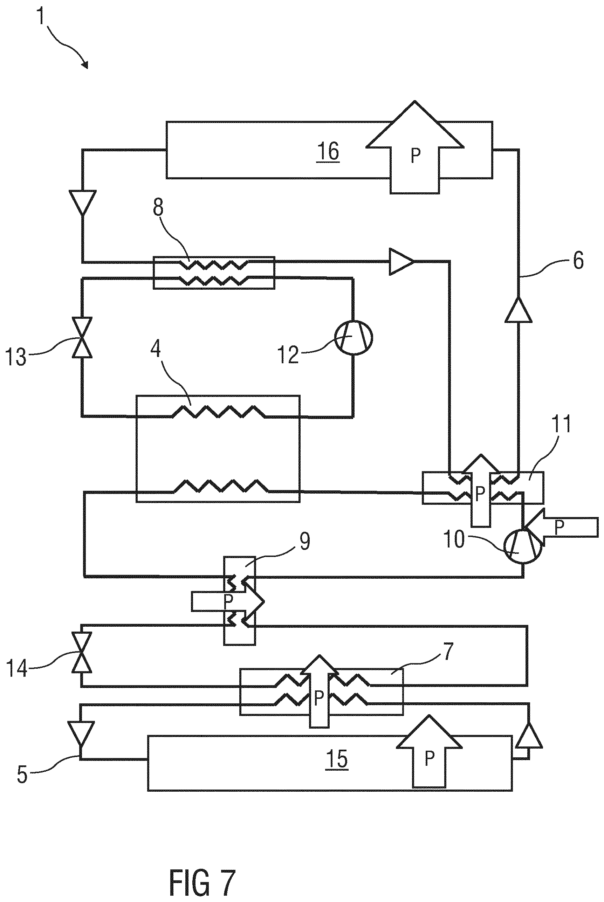

Figur 7 ist eine schematische Ansicht des Temperierungssystems 1 aus den Figuren 1 und 3 im Teillastbetrieb. Dabei ist nur der Verdichter 10 der kalten Stufe aktiv, während der Verdichter 12 der warmen Stufe ausgeschaltet ist. In dieser Betriebsart wirkt der Zusatzwärmetauscher 11 als Gaskühler und Verflüssiger des Kältekreislaufs 2. Die Pfeile P zeigen den Fluss von Wärme und/oder Arbeit im Temperierungssystem 1 im Teillastbetrieb an.

Das Temperierungssystem 1 ist dazu konfiguriert, in einem Kühlmodus des zu kühlenden Innenraums und/oder der zu kühlenden Komponente die dort vorhandene Wärme in den ersten Kühlmittelkreislauf 5 einzutragen und die Wärme aus dem zweiten Kühlmittelkreislauf 6 in eine Umgebung auszutragen, und in einem Heizmodus des zu heizenden Innenraums und/oder der zu heizenden Komponente die in der Umgebung vorhandene Wärme in den ersten Kühlmittelkreislauf 5 einzutragen und die Wärme aus dem zweiten Kühlmittelkreislauf 6 in den zu heizenden Innenraum und/oder die zu heizende Komponente auszutragen.

### Bezugszeichenliste

- 1: Temperierungssystem
- 2: erster Kältemittelkreislauf
- 3: zweiter Kältemittelkreislauf
- 4: Hauptwärmetauscher
- 5: erster Kühlmittelkreislauf
- 6: zweiter Kühlmittelkreislauf
- 7: erster Nebenwärmetauscher
- 8: zweiter Nebenwärmetauscher
- 9: innerer Wärmetauscher
- 10: Verdichter
- 11: Zusatzwärmetauscher
- 12: Verdichter
- 13: Expansionsorgan
- 14: Expansionsorgan
- 15: Wärmequelle
- 16: Wärmesenke
- 17: Verflüssiger
- 18: Magnetventil
- P: Pfeil

## Patentansprüche

1. Temperierungssystem (1) zum Heizen und Kühlen eines Innenraums und/oder mindestens einer Komponente eines Fahrzeugs, aufweisend einen ersten, mit einem Tieftemperatur-/Hochdruck-Kältemittel betriebenen Kältemittelkreislauf (2) und einen zweiten, mit einem Hochtemperatur-/Niederdruck-Kältemittel betriebenen Kältemittelkreislauf (3), welche über einen Hauptwärmetauscher (4) thermisch miteinander verbunden sind,
**gekennzeichnet durch** einen ersten Kühlmittelkreislauf (5) und einen zweiten Kühlmittelkreislauf (6), wobei der erste Kühlmittelkreislauf (5) über einen ersten Nebenwärmetauscher (7) mit dem ersten Kältemittelkreislauf (2) und der zweite Kühlmittelkreislauf (6) über einen zweiten Nebenwärmetauscher (8) mit dem zweiten Kältemittelkreislauf (3) gekoppelt ist, wobei das Temperierungssystem (1) dazu konfiguriert ist, in einem Kühlmodus des zu kühlenden Innenraums und/oder der zu kühlenden Komponente die dort vorhandene Wärme in den ersten Kühlmittelkreislauf (5) einzutragen und die Wärme aus dem zweiten Kühlmittelkreislauf (6) in eine Umgebung auszutragen, und in einem Heizmodus des zu heizenden Innenraums und/oder der zu heizenden Komponente die in der Umgebung oder aus Abwärme einer Komponente vorhandene Wärme in den ersten Kühlmittelkreislauf (5) einzutragen und die Wärme aus dem zweiten Kühlmittelkreislauf (6) in den zu heizenden Innenraum und/oder die zu heizende Komponente auszutragen.

2. Temperierungssystem (1) nach Anspruch 1,
**gekennzeichnet durch** einen Zusatzwärmetauscher (11), der den ersten Kältemittelkreislauf (2) mit dem zweiten Kühlmittelkreislauf (6) thermisch verbindet.

3. Temperierungssystem (1) nach Anspruch 1 oder 2,
**dadurch gekennzeichnet, dass** der erste Kältemittelkreislauf (2) einen inneren Wärmetauscher (9) aufweist, der einen Kreislaufzweig höherer Temperatur mit einem Kreislaufzweig niedrigerer Temperatur thermisch verbindet.

4. Temperierungssystem (1) nach einem der vorhergehenden Ansprüche,
**gekennzeichnet durch** einen Nebenkreis, der mit dem zweiten Kältemittelkreislauf (3) fluidisch verbunden ist und einen Kondensator oder Verflüssiger (17) aufweist, der dazu angeordnet ist, seine Abwärme an die Umgebung abzugeben, wobei im Nebenkreis ein Ventil, insbesondere ein Magnetventil (18), integriert ist, das dazu konfiguriert ist, den Nebenkreis optional zuzuschalten.

5. Fahrzeug, umfassend ein Temperierungssystem (1) nach einem der vorhergehenden Ansprüche.

6. Fahrzeug nach Anspruch 5, ausgebildet als Nutzfahrzeug.
